# EUROPÄISCHE PATENTSCHRIFT

(11) **EP 2 151 887 B1**
(45) Veröffentlichungstag und Bekanntmachung des Hinweises auf die Patenterteilung: **08.06.2011**
(21) Anmeldenummer: 09009966.4
(22) Anmeldetag: 01.08.2009
(51) Int. Cl.: H01Q 1/12, E04H 12/10, F16B 7/18

(54) **Antennenmast**
Antenna mast
Mât d'antenne

(30) Priorität: 01.08.2008 ES 200801693 U; 01.08.2008 ES 200801692 U
(43) Veröffentlichungstag der Anmeldung: 10.02.2010
(73) Patentinhaber: TELEVES, S.A., 15706 Santiago de Compostela (ES)
(72) Erfinder: Lago Rama, Manuel, 15706 Santiago de Compostela (ES)
(74) Vertreter: Dosterschill, Peter

(56) Entgegenhaltungen:
- WO-A-03/009416
- GB-A- 701 195
- US-A- 4 775 258
- US-A- 5 956 917
- US-B1- 6 887 009

## Beschreibung

Die vorliegende Erfindung betrifft einen Turm, insbesondere einen Antennenmast nach dem Oberbegriff des Patentanspruchs 1.

Hohe Antennenmasten für Empfangsantennen, z.B. Fernsehempfangsantennen, und Sendeantennen werden benötigt, um die Empfangs- beziehungsweise Sendebedingungen zu verbessern und eine hinreichend gute Empfangs- bzw. Sendequalität herzustellen.

Antennenmasten können eine turmartige Struktur aufweisen bzw. aus einer Stange bestehen, die auf eine turmartigen Struktur installiert ist. Die turmartigen Strukturen können dabei aus Modulen bestehen, die in vertikaler Richtung aufeinander gefügt werden. Diese Module weisen in ihrem Verbindungsbereich korrespondierende Verbindungselemente auf.

Bei einem bekannten Produkt ("Towers") der Firma Televés S.A. bestehen diese korrespondierenden Verbindungselemente zweier Module aus einem ersten Element mit einem Endabschnitt, der eine Schraubenwindung aufweist, und aus einem zweiten Element mit einem Endabschnitt, an dem eine bewegliche Schraubenmutter angeordnet ist, die durch ein mit dem Endabschnitt verschweißtes Befestigungselement (Scheibe) gegen eine unbeabsichtigte Ablösung gesichert ist. Die Schraubenmutter wird bei der Montage auf die Schraubenwindung des ersten Elements aufgeschraubt. Damit werden die beiden Module fest miteinander verbunden.

Nachteilig ist jedoch, dass die Schraubenmuttern die Prozesse des Badens (z.B. Zinkbad, Briocomatado-Bad, Chromsilikat-Bad) und Bemalens der Antennenmasten erschweren.

Turm-Anordnungen sind aus der WO 03/009416 A, die einen Antennenmast mit Fachwerkskonstruktion offenbart, aus der US-A-4 775 258, die eine Fachwerkskonstruktion offenbart, aus der GB 701 195 A1 und aus der US-A 59956 917 bekannt, die jeweils eine klassische Schraubetement/Schraubmutterverbindung offenbaren. Die bekannten Turm-Anordnungen erfordern eine vergleichsweise komplexe Herstellung.

Der Erfindung liegt die Aufgabe zugrunde, einen mehrteiligen Turm, insbesondere einen Antennenmast mit mindestens zwei aufeinander angeordneten Teilen zu schaffen, welcher in einfacher Weise herzustellen ist.

Diese Aufgabe wird durch einen Turm gemäß Anspruch 1 gelöst.

Der Turm, insbesondere Antennenmast gemäß der Erfindung weist mindestens einen ersten Antennenmastteil und mindestens einem zweiten Antennenmastteil auf, wobei der erste Antennenmastteil ein erstes Verbindungselement aufweist und wobei der zweite Antennenmastteil ein zweites Verbindungselement aufweist. Dabei weist das erste Verbindungselement des ersten Antennenmastteils ein Schraubelement (Schraubwindung) auf, während das zweite Verbindungselement des zweiten Antennenmastteil eine Schraubmutter aufweist, mit der eine Schraubverbindung mit dem Schraubelement des ersten Antennenmastteils herstellbar ist Das zweite Verbindungselement weist ein Befestigungselement im Endbereich des zweiten Antennenmastteils auf, welches ein Ablösen der Schraubmutter vom zweiten Antennenmastteil verhindert,
Erfindungsgemäß ist das Befestigungselement auf den zweiten Antennenmastteil montiert.

Das Befestigungselement des zweiten Antennenmastteils hält die Schraubenmutter am zweiten Antennenmastteil und verhindert, dass sich die Schraubenmutter vom zweiten Antennenmastteil löst und verloren geht.

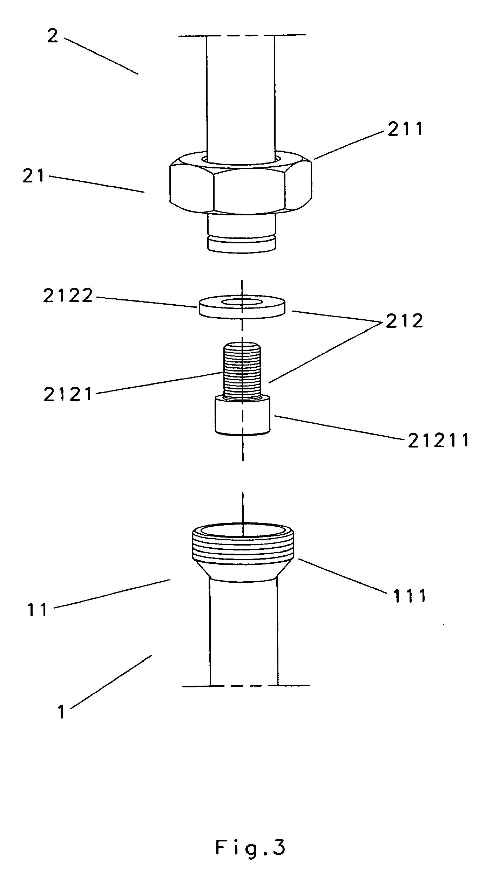

Hierdurch wird der Vorteil erzielt, dass sich das die Schraubenmutter erst dann auf das zweite Antennenmastteil aufmontieren lässt, nachdem dieses einem Bad (z.B. Zinkbad) oder mehreren Bädern unterzogen und angestrichen worden wird. Die Schraubenmutter befindet sich damit während des Bades und Streichens des zweiten Antennenmastteils nicht an diesem und deckt diesen auch nicht ab. Erst nach dem Baden und Streichen wird die Schraubmutter auf den zweiten Antennenmastteil aufgebracht und anschließend werden eine Scheibe (2121 in Figur 3) und eine Schraube (2122 in Figur 3), die gemeinsam das Befestigungselement bilden, an den zweiten Antennenmastteil montiert. Damit lässt sich vorteilhafterweise das Befestigungselement auf den zweiten Antennenmastteil montieren, nachdem dieser einschließlich Bad und Anstrich hergestellt ist: Das Befestigungselement kann also vorteilhafterweise erst dann an das zweite Verbindungselement montiert werden, wenn dieses mit dem ersten Verbindungselement verbunden wird, wenn also der erste Antennenmastteil mit dem zweiten Antennenmastteil verbunden wird.

Bei der vorgenannten Ausführungsform weist das Befestigungselement eine Schraube auf. Damit wird der Vorteil erzielt, dass das Befestigungselement einfach aufgebaut ist. Zugleich wird der Vorteil erzielt, dass sich das Befestigungselement in einfacher Weise an den zweiten Antennenmastteil montieren lässt.

Das Befestigungselement kann auch eine Scheibe umfassen. Die Scheibe dient als Anschlag, sie verhindert, dass sich die Schraubenmutter von dem zweiten Teil des Antennenmastes löst. Auch hierdurch werden die Vorteile erzielt, dass das Befestigungselement einfach aufgebaut ist und dass sich dieses in einfacher Weise an den zweiten Antennenmastteil montieren lässt.

Die Schraube des Befestigungselements weist einen prismaförmigen Kopf auf. Damit wird in vorteilhafter Weise ermöglicht, dass die Schraube einen perfekten mechanischen Kontakt mit dem ersten Antennenmastteil bildet, indem der Kopf in eine entsprechend ausgeformte Aufnahmeöffnung des ersten Antennenmastteils eingepasst ist.

Im ersten Antennenmastteil weist die vorgenannte Aufnahmeöffnung eine innere Wandung auf. Der prismaförimge Kopf der Schraube des Befestigungselements ist in die Aufnahmeöffnung einsetzbar, wobei die Oberfläche des prismaförmigen Kopfes in Kontakt mit der inneren Wandung der Aufnahmeöffnung des ersten Antennenmastteils steht.

Die Erfindung wird nun im Folgenden anhand der Zeichnungen beispielhaft beschrieben.

Es zeigt:
- Figur 1: einen Antennenmast gemäß der Erfindung mit mehreren aufein- ander angeordneten Teilen;
- Figur 2: den Verbindungsbereich der verschiedenen Antennenmastteile in einem Antennenmast nach Figur 1; und
- Figur 3: das erste und das zweite Verbindungselement des erfindungsgemäßen Antennenmastes nach Figur 1.

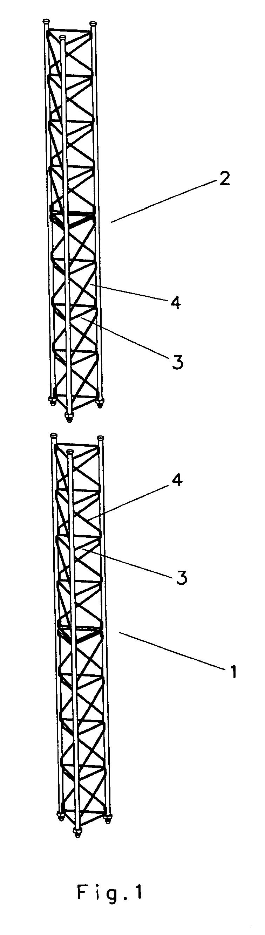

Figur 1 zeigt einen Antennenmast gemäß der Erfindung, der aus verschiedenen Teilen 1, 2 besteht, die bei dem in Figur 1 dargestellten Beispiel aufeinander angeordnet sind. Jedes Teil des Antennenmastes 1,2, ... besteht aus parallelen Rohren 3, die im montierten Zustand vertikal angeordnet sind. Die Rohre 3 sind untereinander durch schräg oder horizontal verlaufende Stäbe bzw. Streben 4 miteinander verbunden. Auf diese Ausgestaltung des Antennenmastes ist die Erfindung jedoch nicht eingeschränkt. Die Teile des erfindungs-gemäßen Antennenmastes haben jedoch Verbindungselemente 11,21, die im Folgenden beschrieben werden.

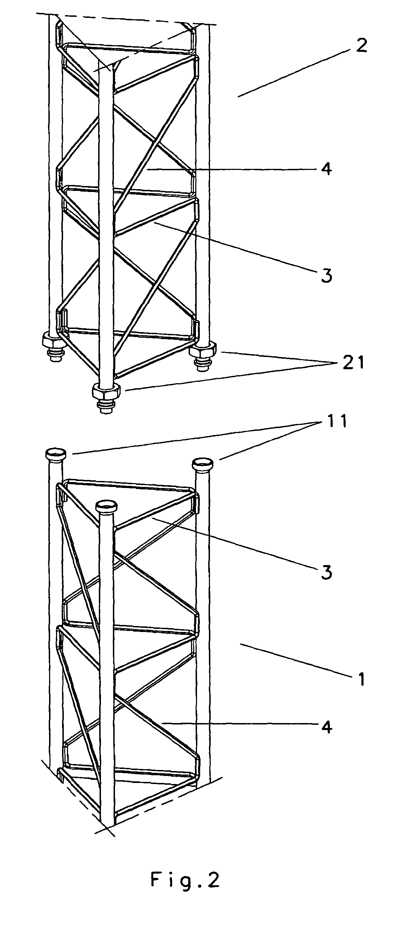

Figur 2 zeigt den jeweiligen Verbindungsbereich zweier Teile des erfindunggemäßen Antennenmastes. Wie in der Figur dargestellt, hat der erste Antennenmastteil 1 wenigstens ein erstes Verbindungselement 11, während der zweite Antennenmastteil 2 wenigstens ein zweites Verbindungselement 21 hat. Die beiden Verbindungselemente 11, 21 sind im montierten Zustand mithinander verbunden und grundsätzlich vertikal angeordnet.

Figur 3 zeigt das erste Verbindungselement 11 sowie das zweite Verbindungselement 21 des erfindungsgemäßen Antennenmastes. Das Verbindungselement 11 des ersten Antennenmastteils ist ein Element 111 ("Schraubelement") mit einem Schraubgewinde (Schraubwindung), während das zweite Verbindungselement 21 des zweiten Teils 2 des Antennenmastes eine Schraubenmutter 211 umfaßt, die mit dem Schraubelement 111 eine Schraubverbindung mit dem ersten Verbindungselement 11 des ersten Antennenmastteils 1 herstellt. Das zweite Verbindungselement 21 weist im montierten Zustand in seinem Endbereich ein Befestigungselement 212 auf.

Das Befestigungselement 212 ist lösbar montierbar am zweiten Antennenmastteil angeordnet; es ist insbesondere verschraubbar und damit auch vom zweiten Antennenmastteil 2 demontierbar. Es ist also nicht mit dem zweiten Antennenmastteil 2 verschweißt. Hierdurch wird ermöglicht, dass die Schraubenmutter 211 erst dann auf das zweite Antennenmastteil 2 aufmontiert werden kann, nachdem dieses mindestens einem Bad, zum Beispiel einem Zinkbad, unterzogen und angestrichen worden ist. Die Schraubenmutter 211 befindet sich damit während des Bades und des Anstreichvorgangs nicht an dem zweiten Antennenmastteil 2, berührt diesen nicht bzw. deckt diesen nicht ab. Erst nach dem Bad und Anstrich wird die Schraubenmutter 211 auf den zweiten Antennenmastteil 2 aufgebracht und anschließend werden die Scheibe 2121 und die Schraube 2122, die gemeinsam das Befestigungselement 212 bilden, an den zweiten Antennenmastteil 2 montiert. Vorteilhafterweise lässt sich das Befestigungselement 212 auf den zweiten Antennenmastteil 2 montieren, nachdem dieser einschließlich Bad und Anstrich hergestellt ist: Das Befestigungselement 212 kann vorteilhafterweise erst dann an das zweite Verbindungselement 21 montiert werden, wenn dieses mit dem ersten Verbindungselement 11 verbunden wird, wenn also der erste Antennenmastteil 1 mit dem zweiten Antennenmastteil 2 verbunden wird.

Wie in Figur 3 weiter dargestellt, umfasst das Befestigungselement 212 eine Schraube 2121 und eine Scheibe 2122, wobei die Schraube 2121 des Befestigungselements 212 einen prismaförmigen Kopf 21211 aufweist. Der erste Antennenmastteil 1 hat eine Aufnahmeöffnung mit einer inneren Wandung, wobei die Aufnahmeöffnung in der Weise ausgeformt ist, dass der prismaförimge Kopf 21211 der Schraube 2121 in den ersten Antennenmastteil eingepasst ist. Die Oberfläche des prismaförmigen Kopfes 21211 bildet einen stabilen mechanischen Kontakt mit der inneren Wandung der Aufnahmeöffnung. Die Schraube 2121 kann einen andersförmigen Kopf aufweisen, wobei dieser mit der entsprechend ausgeformten Aufnahmeöffnung den vorgenannten stabilen mechanischen Kontakt bildet.

Die Erfindung betrifft auch das vorgenannte Befestigungselement 212.

Weiterhin betrifft die Erfindung auch einen in den Figuren dargestellten Turm, mit mindestens einem ersten Turmteil 1 und mit mindestens einem zweiten Turmteil 2, der im montierten Zustand oberhalb des ersten Turmteils 1 angeordnet ist. Der erste Turmteil weist ein erstes Verbindungselement 11 auf, während der zweite Turmteil 2 ein zweites Verbindungselement 21 aufweist. Das erste Verbindungselement 11 des ersten Turmteils 1 weist ein Schraubelement (Schraubgewinde) auf.

Das zweite Verbindungselement 21 des zweiten Turmteils 2 weist eine Schraubenmutter 211 auf, mit der eine Schraubverbindung mit dem Schraubelement 111 des ersten Turmteils 1 herstellbar ist. Das zweite Verbindungselement 21 weist ein Befestigungselement 212 im Endbereich des zweiten Turmteils 2 auf, welches ein Ablösen der Schraubenmutter 211 vom zweiten Turmteil 2 verhindert. Dieses Befestigungselement 212 ist auf bzw. in den zweiten Turmteil montierbar und ist im montierten Zustand in einer Aufnahmeöffnung des ersten Turmteils eingesetzt. Es weist eine Schraube 2121 und eine Scheibe 2122 auf, die einen Anschlag bildet und ein Ablösen der Schraubenmutter 211 vom zweiten Turmteil 2 verhindert.

Die Schraube 2121 des Befestigungselements 212 weist beispielsweise einen prismaförmigen Kopf 21211 auf, wobei der prismaförmige Kopf 21211 der Schraube 2121 eine mechanische Verbindung mit dem ersten Turmteil 1 einnimmt. Der erste Turmteil weist eine Aufnahmeöffnung auf, die den Kopf der Schraube aufnimmt und mit diesem einen stabilen mechanischen Kontakt bildet. Die Komponenten des Turm entsprechen den oben beschriebenen Komponenten des Antennenmastes.

### Bezugszeichenliste:

- 1: Erster Teil des Antennenmastes bzw. des Turms
- 11: Erstes Verbindungselement
- 111: Schraubelement, Schraubgewinde
- 2: Zweiter Teil des Antennenmastes bzw. des Turms
- 21: Zweites Verbindungselement
- 211: Schraubenmutter
- 212: Befestigungselement
- 2121: Schraube
- 21211: Prismaförmiger Kopf
- 2122: Scheibe
- 3: Parallele (vertikale) Rohre
- 4: Stange, Strebe

## Patentansprüche

1. Turm, insbesondere Antennenmast, mit mindestens einem ersten Antennenmastteil (1) und mit mindestens einem zweiten Antennenmastteil (2),
wobei der erste Antennenmastteil (1) ein erstes Verbindungselement (11) aufweist und wobei der zweite Antennenmastteil (2) ein zweites Verbindungselement (21) aufweist,
wobei das erste Verbindungselement (11) des ersten Antennenmastteils (1) ein Schraubelement (111) aufweist,
wobei das zweite Verbindungselement (21) des zweiten Antennenmastteils (2) eine Schraubenmutter (211) aufweist, mit der eine Schraubverbindung mit dem Schraubelement (111) des ersten Antennenmastteils (1) herstellbar ist,
wobei das zweite Verbindungselement (21) ein Befestigungselement (212) im Endbereich des zweiten Antennenmastteils (2) aufweist, welches ein Ablösen der Schraubenmutter (211) vom zweiten Antennenmastteil (2) verhindert,
wobei das Befestigungselement (212) auf den zweiten Antennenmastteil (2) montiert ist,
wobei das Befestigungselement (212) eine Schraube (2121) aufweist, **dadurch** gekennnzeichnet,
dass die Schraube (2121) des Befestigungselements (212) einen prismaförmigen Kopf (21211) aufweist,
dass der prismaförmige Kopf (21211) der Schraube (2121) des Befestigungselements (212) eine mechanische Verbindung mit dem ersten Antennenmastteil (1) einnimmt,
dass der erste Antennenmastteil (1) eine Aufnahmeöffnung mit einer inneren Wandung aufweist,
dass der prismaförimge Kopf (21211) der Schraube (2121) des Befestigungselements(212) in der Aufnahmeöffnung angeordnet ist, und dass die Oberfläche des prismaförmigen Kopfes (21211) in Kontakt mit der inneren Wandung der Aufnahmeöffnung des ersten Antennenmastteils (1) steht.

2. Turm nach Anspruch 1, **dadurch gekennzeichnet, dass** das Befestigungselement (212) lösbar angeordnet ist.

3. Turm nach einem der vorstehenden Ansprüche, **dadurch gekennzeichnet, dass** das Befestigungselement (212) eine Scheibe (2122) aufweist, die einen Anschlag bildet und ein Ablösen der Schraubenmutter (211) vom zweiten Antennenmastteil (2) verhindert.

## Claims

1. A tower, in particular an aerial mast, with at least one first aerial mast portion (1) and with at least one second aerial mast portion (2),
whereas the first aerial mast portion (1) exhibits a first connection element (11) and whereas the second aerial mast portion (2) exhibits a second connection element (21),
wherein the first connection element (11) of the first aerial mast portion (1) exhibits a screw element (111),
wherein the second connection element (21) of the second aerial mast portion (2) exhibits a screw nut (211), with which a screw connection can be produced with the screw element (111) of the first aerial mast portion (1),
wherein the second connection element (21) exhibits a fastening device (212) in the end region of the second aerial mast portion (2), which prevents the screw nut (211) from loosening from the second aerial mast portion (2),
wherein the fastening device (212) is mounted on the second aerial mast portion (2),
wherein the fastening device (212) exhibits a screw (2121) **characterised in that**
the screw (2121) of the fastening device (212) has a prism-shaped head (21211), the prism-shaped head (21211) of the screw (2121) of the fastening device (212) is in mechanical connection with the first aerial mast portion (1),
the first aerial mast portion (1) exhibits a receiving opening with an inner wall, the prism-shaped head (21211) of the screw of the fastening device (212) is arranged in the receiving opening, and
the surface of the prism-shaped head (21211) is in contact with the inner wall of the receiving opening of the first aerial mast portion (1).

2. A tower according to claim 1, **characterised in that** the fastening device (212) is arranged to be releasable.

3. A tower according to one of the previous claims, **characterised in that** the fastening device (212) exhibits a washer (2122), which forms a stop and prevents the screw nut (211) from loosening from the second aerial mast portion (2).

## Revendications

1. Tour, en particulier mât d'antenne, pourvue d'au moins une première partie de mât d'antenne (1) et d'au moins une seconde partie de mât d'antenne (2),
dans laquelle la première partie de mât d'antenne (1) présente un premier élément de liaison (11) et dans laquelle la seconde partie de mât d'antenne (2) présente un second élément de liaison (21),
dans laquelle le premier élément de liaison (11) de la première partie de mât d'antenne (1) présente un élément de vis (111),
dans laquelle le second élément de liaison (21) de la seconde partie de mât d'antenne (2) présente une vis femelle (211), permettant d'obtenir un raccord à vis avec l'élément de vis (111) de la première partie de mât d'antenne (1),
dans laquelle le second élément de liaison (21) présente un élément de fixation (212) dans la zone d'extrémité de la seconde partie de mât d'antenne (2), qui empêche la vis femelle (211) de se desserrer de la seconde partie de mât d'antenne (2),
dans laquelle l'élément de fixation (212) est monté sur la seconde partie de mât d'antenne (2),
dans laquelle l'élément de fixation (212) présente une vis (2121),
**caractérisée en ce**
**que** la vis (2121) de l'élément de fixation (212) présente une tête prismatique (21211),
**que** la tête prismatique (21211) de la vis (2121) de l'élément de fixation (212) adopte une liaison mécanique avec la première partie de mât d'antenne (1),
**que** la première partie de mât d'antenne (1) présente une ouverture de réception dotée d'une paroi intérieure,
**que** la tête prismatique (21211) de la vis (2121) de l'élément de fixation (212) est disposée dans l'ouverture de réception, et
**que** la surface de la tête prismatique (21211) se trouve en contact avec la paroi intérieure de l'ouverture de réception de la première partie de mât d'antenne (1).

2. Tour selon la revendication 1, **caractérisée en ce que** l'élément de fixation (212) est disposé amovible.

3. Tour selon l'une des revendications précédentes, **caractérisée en ce que** l'élément de fixation (212) présente une rondelle (2122), formant une butée et qui empêche la vis femelle (211) de se desserrer de la seconde partie de mât d'antenne (2).
